(19) Europäisches Patentamt

European Patent Office

Office européen des brevets

(11) Veröffentlichungsnummer : **0 082 105**
**B1**

(12) **EUROPÄISCHE PATENTSCHRIFT**

(45) Veröffentlichungstag der Patentschrift :
**05.03.86**

(21) Anmeldenummer : **82730137.5**

(22) Anmeldetag : **18.11.82**

(51) Int. Cl.⁴ : **H 02 M 3/335**, H 02 H 7/00

(54) Eigensichere Stromversorgungseinrichtung mit einem im Primärkreis eines Transformators angeordneten steuerbaren Halbleiter.

(30) Priorität : **16.12.81 DE 3150398**

(43) Veröffentlichungstag der Anmeldung :
**22.06.83 Patentblatt 83/25**

(45) Bekanntmachung des Hinweises auf die Patenterteilung : **05.03.86 Patentblatt 86/10**

(84) Benannte Vertragsstaaten :
**BE DE FR GB**

(56) Entgegenhaltungen :
**FR-A- 2 298 898**
**GB-A- 2 031 623**
**US-A- 3 515 974**
**US-A- 4 017 781**
**US-A- 4 037 271**

(73) Patentinhaber : **Siemens Aktiengesellschaft**
**Berlin und München Wittelsbacherplatz 2**
**D-8000 München 2 (DE)**

(72) Erfinder : **Röhl, Wolfgang, Dipl.-Ing.**
**Hundekehlestrasse 18a**
**D-1000 Berlin 33 (DE)**

EP 0 082 105 B1

**Beschreibung**

Die Erfindung betrifft eine eingensichere Stromversorgungseinrichtung mit folgenden Merkmalen :

a. ein Gleichrichter zur Umwandlung eines netzseitigen Wechselstromes in einen Gleichstrom ;

b. ein durch einen Taktgenerator steuerbarer Halbleiter zur periodischen Unterbrechung des Gleichstromes ;

c. ein Transformator, in Reihe mit dessen Primärwicklung der steuerbare Halbleiter liegt und dessen Sekundärwicklung den Ausgang speist ;

d. ein Regler zur sekundärseitigen Begrenzung des Ausgangsstromes und

e. ein in Abhängigkeit von Grenzwerten steuerbarer Kurzschließer.

Eine Stromversorgungseinrichtung dieser Art ist durch die DE-A-28 43 093 (entspricht GB-A-20 31 623) bekannt geworden. Sie weist eine mehrfach redundante Strom- und Spannungsbegrenzung auf und erfüllt trotz Anwendung von steuerbaren Halbleitern zur Strombegrenzung die erhöhten Sicherheitsanforderungen der Kategorie « ia » nach der Europanorn EN 50 020. Jedoch arbeitet die bekannte Stromversorgungseinrichtung mit einer verhältnismäßig großen Verlustleistung, die zu einer unerwünschten Erwärmung des Gerätes führt. Ferner bereitet es erhebliche Schwierigkeiten, die theoretischen Grenzen für eigensichere Ströme und Spannungen annähernd zu erreichen.

Der Erfindung liegt die Aufgabe zugrunde, eine möglichst vollständige Ausnutzung der theoretischen Grenzen der Eigensicherheit bei geringer Verlustleistung und schaltungstechnisch einfachem Aufbau zu erreichen.

Gemäß der Erfindung wird diese Aufgabe bei einer eingensicheren Stromversorgungseinrichtung der eingangs genannten Art durch folgende weitere Merkmale gelöst :

f. dem Kurzschließer ist eine Drossel vorgeschaltet ;

g. der Drossel ist ein Spannungsbegrenzer nachgeschaltet und

h. der sekundärseitige Strombegrenzungsregler weist eine rückläufige Strom-Spannungs-Kennlinie auf.

Die Drossel begrenzt im Kurzschlußfall die Geschwindigkeit des Stromanstieges, so daß sich ein die Eingensicherheit gefährdender Strom in der Zeit vom Eintritt des Kurzschlusses bis zum Wirksamwerden des Kurzschließers nicht ausbilden kann. Die unvermeidlichen Verzögerungen, die z. B. mit der Erfassung eines Stromanstieges und der Umsetzung in einen Steuerbefehl für den Kurzschließer, z. B. einen Thyristor, verbunden sind, können sich somit nicht gefahrbringend auswirken. Die andererseits an der Drossel entstehenden Spannungsspitzen lassen sich durch spannungsbegrenzende Mittel geeigneter Art beseitigen. Z. B. eignen sich hierfür Zenerdioden oder auch ein Kondensator geeigneter Kapazität, die verhältnismäßig gering sein kann. Von einer allgemeinen Leistungsbegrenzung der Stromversorgungseinrichtung kann nun abgesehen werden, weil die Drossel in Verbindung mit dem Spannungsbegrenzer die kritischen transienten Vorgänge beim Eintritt eines Kurzschlusses sicher beherscht.

Die rückläufige Kennlinie des Strombegrenzungsreglers, unter der ein Verhalten zu verstehen ist, bei dem ausgehend von einem Grenzwert des Stromes und der Spannung bei zunehmender Belastung Strom und Spannung sinken, kann die Stromversorgungseinrichtung auch mit kapazitiver Belastung ohne Einbuße an Sicherheit betrieben werden. Die Schwierigkeit bei dieser Betriebsart besteht darin, daß im Augenblick des Anschlusses einer Kapazität an die eigensichere Stromversorgungseinrichtung ein Strom fließt, der nur durch die Leitungsimpedanzen begrenzt ist. Arbeitet aber die Überstromabschaltung unverzögert, so wird das Gerät abgeschaltet und der kapazitive Verbraucher kann nicht in Betrieb genommen werden, obwohl ein Dauerbetrieb möglich wäre. Ohne die rückläufige Strom-Spannungs-Kennlinie des Strombegrenzungsreglers wäre eine nur teilweise Abhilfe dadurch möglich, daß der sekundärseitige Strombegrenzungsregler einen Einsatzpunkt erhält, der vor dem Ansprechen des Kurzschließers liegt.

Bei einer Stromversorgungseinrichtung für elektronisch gesteuerte Fernsprechvermittlungseinrichtungen (US-A-3 515 974) ist es bereits bekannt, sekundärseitig als Spannungsbegrenzer einen als Kurzschließer wirkenden Thyristor vorzusehen. Diesem Kurzschließer ist eine Drosselspule vorgeschaltet, der zwei parallel zu den Ausgangsklemmen liegenden Kondensatoren nachgeschaltet sind. Diese Schaltungselemente haben die Aufgabe, den auf der Sekundärseite der Stromversorgungseinrichtung fließenden Gleichstrom zu glätten und wirken somit als Filter. Da die Schaltfrequenz von Stromversorgungseinrichtungen der hier betrachteten Art recht hoch gewählt wird und beispielsweise 100 kHz betragen kann, genügen zur Filterung eine Drossel mit verhältnismäßig kleiner Induktivität und Kondensatoren mit kleiner Kapazität. Diese Elemente sind daher im Gegensatz zu dem nach der Erfindung vorgesehenen Elementen zur Begrenzung des Anstiegs von Strom und Spannung am Ausgang praktisch nicht wirksam.

In Verbindung mit der rückläufigen Strom-Spannung-Kennlinie des Strombegrenzungsreglers ist ein besonders günstiges Verhalten der Stromversorgungseinrichtung dadurch zu erzielen, daß auf der Sekundärseite des Transformators Verzögerungsglieder für einen zeitlich verzögerten Anstieg des Stromes und/oder der Spannung nach Aufhebung eines Kurzschlusses am Ausgang vorgesehen werden.

Auf der Primärseite des Transformators kann ein Strommeßglied angeordnet und mit dem Taktgeber des steuerbaren Halbleiters im Sinne einer Strombegrenzung oder Abschaltung bei dem Auftreten eines sekundärseitigen Kurzschlusses verbunden sein. Wird der Ausgang kurzgeschlossen, so spricht der im Sekundärteil angeordnete Kurzschließer an, während gleichzeitig der Spannungsregler bestrebt ist, der Spannungsabsenkung entgegenzuwirken. Dies ist mit einem Ansteigen der Verlustleistung vebunden. Das Strommeßglied sorgt für die Abschaltung der Stromversorgungseinrichtung und schützt dadurch die Bauelemente vor Überlastung.

Werden eingensichere Stromversorgungseinrichtungen der vorstehend betrachteten Art an ihrer Ausgangsseite mit einem Regler zur Strombegrenzung ausgestattet, so bereitet die Spannungsregelung bei hohen Genauigkeitsansprüchen Probleme, die bisher durch den Einsatz von zwei Spannungsreglern gelöst wurden. Dies führt aber zu einen hohen Aufwand an Bauelementen und zu dem Entstehen zusätzlicher Verluste. Ein sekundärseitiger Spannungsregler ist z. B. in der US-A-4 037 271 beschrieben. Nach einer Weiterbildung der Erfindung werden die erwähnten Schwierigkeiten dadurch vermieden, daß einem solchen sekundärseitig angeordneten und auf den Primärkreis des Transformators einwirkenden Spannungsregler in Abhängigkeit von dem Arbeiten des Strombegrenzungsreglers wahlweise ein am Eingang oder am Ausgang des Strombegrenzungsreglers auftretendes Signal zuführbar ist und hierzu dem Spannungsregler ein Regelumschalter vorgeschaltet ist, der beim Einsetzen der Strombegrenzung von dem Ausgangssignal auf das Eingangsignal des Stromreglers umschaltet. Auf diese Weise wird ein Ansteigen der Spannung vor dem Strombegrenzungs-regler aufgrund des Eingriffes des Spannungsreglers verhindert. Ferner umfaßt bei dieser Anordnung die Regelschleife des Spannungsreglers praktisch die gesamte Stromversorgungseinrichtung vom Ausgang zum Eingang.

Die Erfindung wird im folgenden anhand des in der Zeichnung dargestellten Ausführungsbeispieles näher erläutert.

Die Fig. 1 zeigt eine Stromversorgungseinrichtung nach der Erfindung schematisch in einem Blockschaltbild.

Die Fig. 2 zeigt eine rückläufige Strom-Spannungskennlie, während die Fig. 3 Beispiele für einen zeitlich verzögerten Strom- und Spannungsanstieg zeigt, der allein oder in Verbindung mit der rückläufigen Kennlinie anwendbar ist.

Die Fig. 4A und 4B stellen gemeinsam ein vollständiges Schaltbild einer Stromversorgungseinrichtung nach der Erfindung dar.

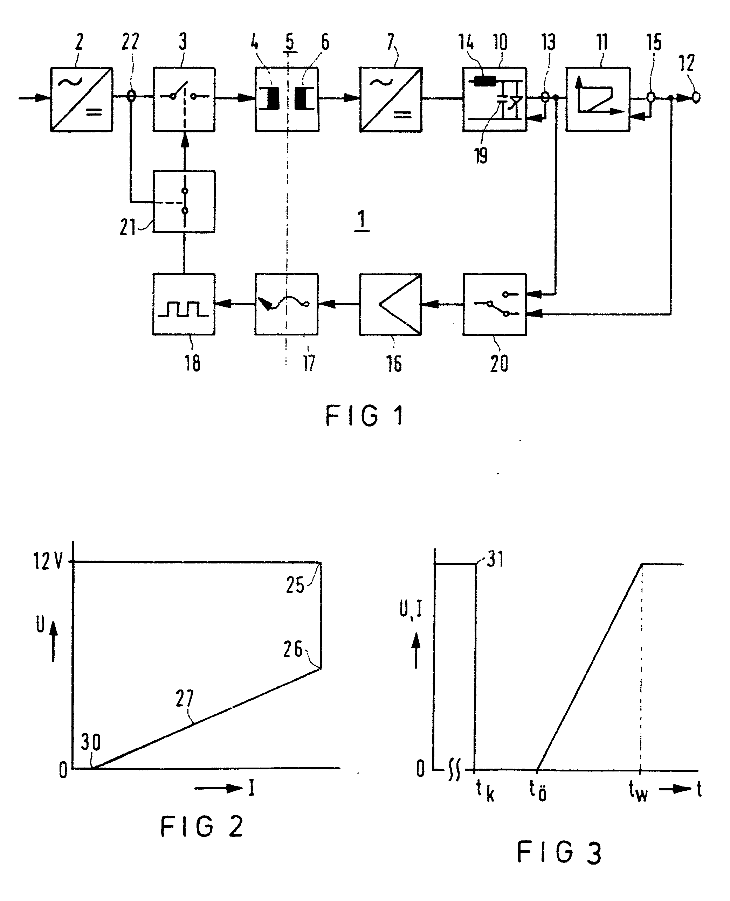

Nach dem Prinzipschaltbild gemäß der Fig. 1 besitzt die Stromversorgungseinrichtung 1 eingangsseitig einen Gleichrichter 2, der den aus dem Netz entnommenen Wechselstrom gleichrichtet. Dieser Gleichstrom wird durch einen steuerbaren Halbleiter 3, z. B. einen Thyristor oder Transistor, periodisch unterbrochen und der Primärwicklung 4 eines Transformators 5 zugeführt. Der in der Sekundärwicklung 6 des Transformators 5 induzierte, von der Netzseite galvanisch getrennte Wechselstrom wird wiederum in einem Gleichrichter 7 gleichgerichtet und unter Zwischenschaltung eines Kurzschließers 10 und eines Strombegrenzungsreglers 11 an einem Ausgang 12 bereitgestellt. Der Kurzschließer wird durch ein Strommeßglied 13 beeinflußt und weist eine vorgeschaltete Drossel 14 auf. Als eigentliches kurzschließendes Element kann z. B. ein Thyristor dienen. Der Strombegrenzungsregler 11 wird von einem weiteren Strommeßglied 15 beeinflußt und ist so ausgebildet, daß sich an dem Ausgang 12 eine rückläufige Strom-Spannungs-Kennlinie ergibt. Ein Spannungsregler 16 wirkt vom Ausgang 12 auf den steuerbaren Halbleiter 3 auf der Primärseite des Transformators 5 zurück. Um auch im Steuerkreis eine galvanische Trennung zu erzielen, wird das Regelsignal einem Taktgenerator 18 nicht direkt, sondern durch einen Optokoppler 17 zugeführt.

Dem Spannungsregler 16 ist ein Regelumschalter 20 vorgeschaltet, an dessen Eingänge sowohl ein am Ausgang 12 anliegendes Spannungssignal als auch ein weiteres am Eingang des Strombegrenzungsreglers 11 vorhandenes Spannungssignal angelegt sind. Sobald der Strombegrenzungs-regler 11 den Strom begrenzt, schaltet der Regelumschalter von dem Ausgangssignal auf das Eingangssignal des Strombegrenzungsreglers 11 um.

Im Primärteil der Stromversorgungseinrichtung ist zwischen den steuerbaren Halbleiter 3 und den Taktgenerator 18 noch ein Überstromschalter 21 eingefügt, der durch ein Strommeßglied 22 beaufschlagbar ist. Sobald der am Eingang durch das Strommeßglied 22 feststellbare Strom einen Grenzwert überschreitet, was insbesondere beim Ansprechen des Kurzschließers 10 der Fall sein wird, legt der Überstromschalter 21 durch Sperrung des steuerbaren Halbleiters 3 die Energieübertragung still.

Aus der Fig. 2 ist das Verhalten des Strombegrenzungsreglers 11 näher zu ersehen. Hierzu ist in einem Diagramm die Spannung über dem Strom aufgetragen. Wie man erkennt, ist die Spannung bis zu einem Grenzwert des Stromes etwa konstant. Dieser mit 25 bezeichnete Betriebspunkt entspricht der größten Leistungsabgabe der Stromversorgungseinrichtung. Er liegt z. B. bei 12 Volt und 1,5 Ampere und ist damit höher als bei den bisher üblichen eigensicheren Stromversorgungseinrichtungen. Wird die Belastung ausgehend von dem Betriebspunkt 25 gesteigert, so sinkt die Spannung bis zu dem Betriebspunkt 26 ab, wobei der Strom praktisch unverändert bleibt. Eine noch weitere Belastung hat ein Absinken von Strom und Spannung entlang der Geraden 27 bis zu einem unteren Betriebspunkt 30 zur Folge, der in der Größenordnung von Milli-ampere liegen kann. Die Kennlinie gemäß der Fig. 2 wird bei zunehmender Belastung unverzögert durchlaufen, während in umgekehrter Richtung Strom und Spannung verzögert ansteigen.

In der Fig. 3 ist dieses Verhalten des Stromreglers 11 bei Kurzschluß anhand eines Diagrammes veranschaulicht, in dem Strom und Spannung über der Zeit aufgetragen sind. Ausgehend von einem Betriebspunkt 31 sinken Strom und Spannung bei Eintritt eines Kurzschlusses im Zeitpunkt $t_k$ auf den Wert O und verbleiben dort bis zum Zeitpunkt $t_ö$, in dem der Kurzschluß wieder aufgehoben wird. Strom und Spannung steigen dann allmählich wieder an und erreichen im Zeitpunkt $t_w$ den ursprünglichen Wert in dem Betriebspunkt 31. Als Charakteristik der Wiederkehr von Strom und Spannung ist in der Fig. 3 eine lineare Zunahme dargestellt. Es kann auch eine andere Charakteristik vorgesehen sein, sofern sie nur die Bedingung erfüllt, daß der Anstieg von Strom und Spannung vom Wert O bis zum Endwert sich über einen gewissen Zeitraum erstreckt. Ein im Kurzschlußfall fließender minimaler Reststrom ist in der Fig. 3 vernachlässigt.

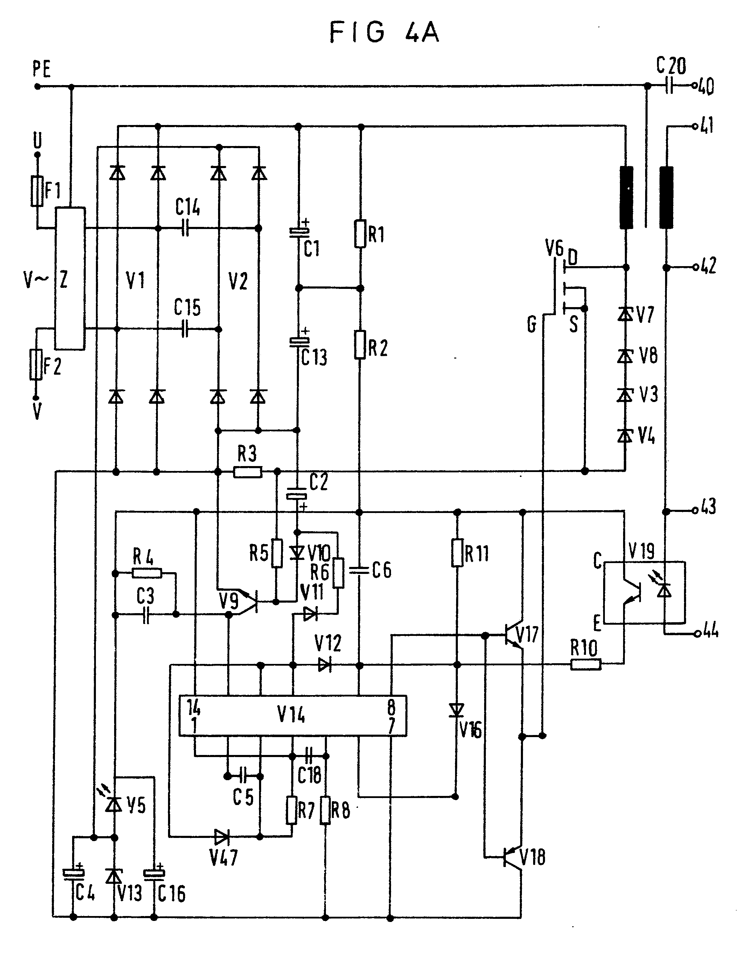

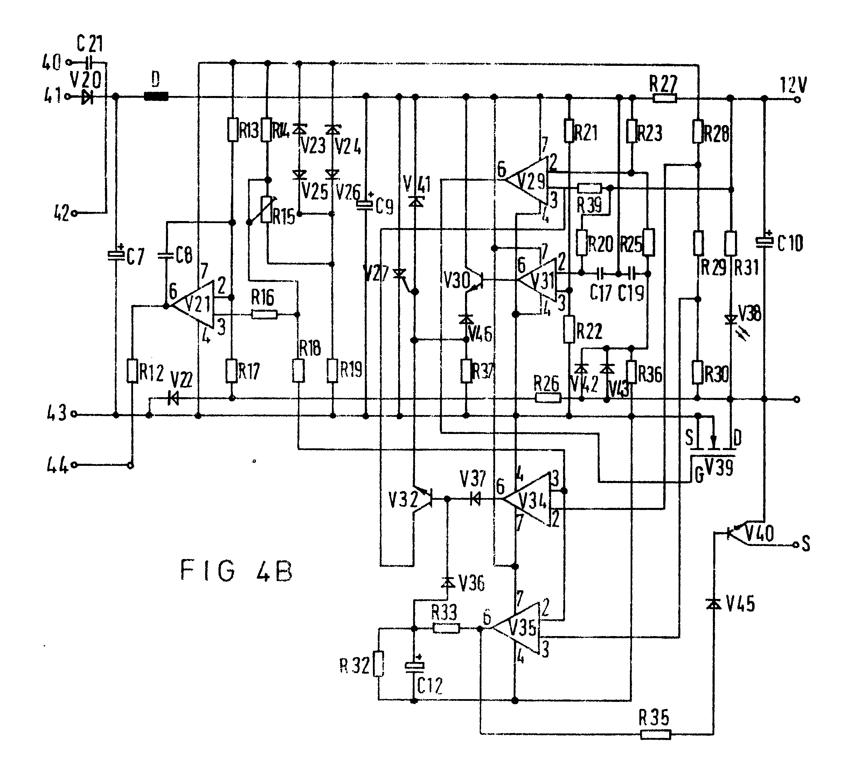

Weitere Einzelheiten der Stromversorgungseinrichtung werden anhand der Fig. 4A und 4B erläutert, die zusammenhängend ein vollständiges Schaltbild darstellen. Ausgehend von den netzseitigen Anschlußpunkten u und v wird die Netzspannung, z. B. 220 Volt Wechselspannung, durch einen aus Dioden gebildeten Gleichrichter V1 gleichgerichtet und mittels der Kondensatoren C1 und C13 geglättet. Diese Gleichspannung wird mittels eines Leistungs-Feldeffekt-Transistors V6, der dem steuerbaren Halbleiter 3 in Fig. 1 entspricht, periodisch an die Primärwicklung des Transformators T angelegt. Die Taktfrequenz dieses Vorganges wird in einem Steueroszillator erzeugt. Dieser erhält eine Hilfsspannung über Kondensatoren C14 und C15 sowie einen Gleichrichter V2.

Der Steueroszillator umfaßt einen Sechsfach-Schmitt-Trigger V14, Kondensatoren C5, C6 und C18, Diode V16 sowie die Widerstände R7, R8 und R11. Das Tastverhältnis des Steueroszillators ist beeinflußbar über den Optokoppler V19 sowie über die Widerstände R10 und R11. Diese Elemente beeinflussen die Entladung eines Kondensators C6, dessen periodische Aufladung über eine Diode V16 zusammen mit einer aus einer Kapazität C18 und einem Widerstand R8 gebildeten Nadelimpulsschaltung erfolgt.

Der Transistor V6 ist in eine Strombegrenzungsschaltung einbezogen, zu der die Widerstände R3, R4, R5, R6 sowie die Kondensatoren C3 und C2 und die Halbleiter V9, V10, V11, V12, V47 und V14 gehören. Die Schaltung arbeitet in der Weise, daß beim Überschreiten eines bestimmten Spannungsabfalles an dem Widerstand R3 der Transistor V9 leitend wird und der Transistor V6 über den Schmitt-Trigger V14 und die Diode V12 gesperrt wird. Hierdurch wird der Strom auf einen bestimmten Wert begrenzt, z. B. 0,6 Ampere. Dauert diese Strombegrenzung länger als ein vorbestimmter Zeitraum, z. B. 0,3 Sekunden, so wird der Kondensator C2 über den Widerstand R6 und die Diode V11 so weit aufgeladen, daß der Transistor V9 dauernd leitend wird, wodurch die Stromversorgung endgültig abgeschaltet wird. Um die Stromversorgungseinrichtung wieder in Betrieb nehmen zu können, ist es erforderlich, die Netzspannung abzuschalten und die Entladung des Kondensators C2 abzuwarten. Nach einer gewissen Zeit, z. B. 10 Sekunden, läßt sich die Stromversorgungseinrichtung wieder in Betrieb nehmen. Dem Benutzer wird der Abschaltvorgang durch Leuchtsignale veranschaulicht. Einerseits erlischt nämlich eine am Ausgang angeordnete Leuchtdiode V38, während die eingangsseitige Leuchtdiode V5 mit verminderter Helligkeit leuchtet.

Der vorstehend beschriebene Schaltungsteil der Stromversorgungseinrichtung gehört zum Primärteil und ist abgesehen von der Leuchtdiode V38 in der Fig. 4a dargestellt. Diese enthält auch die Sekundärwicklung des Transformators T sowie die Schaltungspunkte 40 bis 44, mit denen in der Fig. 4B der Sekundärkreis beginnt. Zunächst wird die in der Sekundärwicklung des Transformators T induzierte Spannung über die Diode V20 gleichgerichtet und mittels des Kondensators C7, der Drossel D und des Kondensators C9 geglättet. Die folgenden Bauelemente dienen der Spannungs- und Stromregelung sowie der Überwachung. Für die Regelung ist eine Referenzspannungsquelle vorgesehen, die aus den Elementen V23, V24, V25 und V26 sowie den Widerständen R14, R15 und R19 gebildet ist.

Die Ausgangsspannung + U der Stromversorgungseinrichtung wird über Widerstände R13, R17 und R26 an den invertierenden Eingang des Operationsverstärkers V21 angelegt. Diese drei Widerstände teilen die Ausgangsspannung im Verhältnis 1 : 2. Ist die sich dann ergebende Spannung ebenso groß wie die Spannung der Referenzspannungsquelle, so befindet sich der mit dem Kondensator C8 als Integrierer geschaltete Operationsverstärker V21 im Gleichgewicht. Wird die Ausgangsspannung größer, so integriert der Regler die Spannungsabweichung und sein Ausgang wird stärker positiv. Über den Optokoppler V19 wird in der beschriebenen Weise das Tastverhältnis des Steueroszillators verringert, wodurch die Ausgangsspannung so lange kleiner wird, bis die beiden Eingangsspannungen an dem Operationsverstärker V21 wieder gleich sind. Bei zu kleiner Ausgangsspannung verhält sich die Regelung umgekehrt, d. h.. das Tastverhältnis wird vergrößert.

Überschreitet im Fehlerfall die Ausgangsspannung den Sollwert um einen bestimmten Betrag, d. h., beträgt diese z. B. 13, 5 Volt statt der Nennspannung von 12 Volt, so veranlaßt der Operationsverstärker V34, dem über den aus den Widerständen R28, R29 und R30 gebildeten Spannungsteiler ein Steuersignal zugeführt wird, die Zündung eines Thyristors V27 über die Diode V37 und den Transistor V32. Hierdurch wird die Ausgangsspannung kurzgeschlossen. Da zugleich der Primärstrom des Transformators T (Fig. 4A) stark ansteigt, tritt die primärseitige Strombegrenzung in Tätigkeit und schaltet die Stromversorgungseinrichtung ab. Als zusätzlicher Schutz gegen Überspannungen ist die Z-Diode V41 vorhanden, die z. B. so bemessen sein kann, daß sie bei einer Spannung von 15 Volt anspricht.

Die Strombegrenzungsregelung umfaßt einen Meßwiderstand R27 sowie einen Spannungsteiler aus den Widerständen R23, R25 und R36 und einen Operationsverstärker V29. Durch diesen wird ein weiterer Leistungs-Feldeffekt-Transistor V39 gesteuert, der den Ausgangsstrom beeinflußt. Als Grenzwert des Stromes kann bei der beschriebenen Stromversorgungseinrichtung ein Wert von 1, 5 Ampere eingestellt werden. Die bereits erläuterte rückläufige Kennlinie wird durch die Bauelemente V29, V39, R39 und R27 erreicht. Die Widerstände R23, R25 und R36 sorgen mit den Dioden V42 und V43 dafür, daß die Strom-Spannungs-Kennlinie ab halber Ausgangsspannung rückläufig ist. Im Kurzschlußfall wird der Kondensator C19 durch die Dioden V42 und V43 rasch entladen. Bei der Aufhebung des Kurzschlusses lädt er sich langsam über den Widerstand R36 auf. Damit wird der Strombegrenzungswert langsam von etwa 80 Milliampere auf 1, 5 Ampere hochgeregelt, wie dies bereits beschrieben wurde. Die rückläufige Kennlinie der Stromversorgungseinrichtung erhöht nicht nur die Eigensicherheit, sondern verringert auch die im Kurzschlußfall von dem Transistor V39 abzuführende Verlustleistung. Außerdem wird der Betrieb von nichtohmschen Verbrauchern ermöglicht, die im Einschaltaugenblick ihren Innenwiderstand erheblich ändern, z. B. Glühlampen oder Laser.

Wird beim Versagen des Strombegrenzungsreglers der zulässige Strom von 1, 5 Ampere überschritten und erreicht etwa einen Wert von 1, 7 Ampere, so veranlaßt der Operationsverstärker V31 über den Transistor V30 und die Z-Diode V46 die Zündung des Thyristors V27, was zum sofortigen Kurzschließen der Ausgangsspannung führt. Wesentlich ist hierbei die Begrenzung des Stromanstieges durch die Drossel D, was Vorteile in mehrfacher Hinsicht bietet. Bei einem direkten Kurzschluß des Ausgangs der Stromversorgungseinrichtung wird gleichfalls der Thyristor V27 gezündet, wobei wiederum die Drossel D den Stromanstieg begrenzt. Die unvermeidliche Verzögerung, die sich aus der Bereitstellung des Zündbefehls und dem Zündverzug des Thyristors V27 zusammensetzt, bleibt daher ohne Einfluß auf die Eigensicherheit.

Bei plötzlichen Stromänderungen, d. h. insbesondere bei Aufhebung eines Kurzschlusses am Ausgang, entstehen an der Drossel D Spannungsspitzen. Diese werden durch den Kondensator C9 beseitigt. Da hierfür eine relativ kleine Kapazität ausreicht, wird die Eigensicherheit nicht gefährdet. Andererseits erlaubt die Drossel D den Einsatz eines relativ großen Siebkondensators C7 und trägt zusammen mit dem Kondensator C8 zur Siebung bei.

Als zusätzliche Eigenschaft verfügt die beschriebene Stromversorgungseinrichtung über eine Unterspannungsauslösung, die bei einem Absinken der normalen Ausgangsspannung von 12 Volt auf ca. 10,5 Volt anspricht. Hierzu gehören der Spannungsteiler aus den Widerständen R28, R29 und R30 sowie der Operationsverstärker V35 und die Diode V36 und der Transistor V32. Der Widerstand R33 und der Kondensator C12 sorgen für eine gewünschte Verzögerung der Abschaltung. Diese erfolgt wiederum über den Thyristor V27.

## Patentansprüche

1. Eigensichere Stromversorgungseinrichtung (1) mit folgenden Merkmalen :

a. ein Gleichrichter (2) zur Umwandlung eines netzseitigen Wechselstromes in einen Gleichstrom ;

b. ein durch einen Taktgenerator (18) steuerbarer Halbleiter (3) zur periodischen Unterbrechung des Gleichstromes ;

c. ein Transformator (5), in Reihe mit dessen Primärwicklung (4) der steuerbare Halbleiter (3) liegt und dessen Sekundärwicklung (6) den Ausgang (12) speist ;

d. ein Regler (11) zur sekundärseitigen Begrenzung des Ausgangsstromes ;

e. ein in Abhängigkeit von Grenzwerten steuerbarer Kurzschließer (10), gekennzeichnet durch folgende weitere Merkmale :

f. dem Kurzschließer (10) ist eine Drossel (14) vorgeschaltet und

g. der Drossel (14) ist ein Spannungsbegrenzer (19) nachgeschaltet.

h. der sekundärseitige Strombegrenzungsregler (11) weist eine rückläufige Strom-Spannungs-Kennlinie auf.

2. Schaltungsanordnung nach Anspruch 1, dadurch gekennzeichnet, daß auf der Sekundärseite des Transformators (T) Verzögerungsglieder (C19, R36) für einen zeitlich verzögerten Anstieg des Stromes und/oder der Spannung nach Aufhebung eines Kurzschlusses am Ausgang (+U) vorgesehen sind.

3. Schaltungsanordnung nach Anspruch 1, dadurch gekennzeichnet, daß auf der Primärseite des Transformators (T) ein Strommeßglied (R3) angeordnet und dieses mit dem Taktgeber (V14) des steuerbaren Halbleiters (V6) im Sinne einer Strombegrenzung oder Abschaltung bei dem Auftreten eines sekundärseitigen Kurzschlusses verbunden ist.

4. Schaltungsanordnung nach Anspruch 2, dadurch gekennzeichnet, daß einem sekundärseitig angeordneten und auf den Primärkreis des Transformators (5) einwirkenden Spannungsregler (16) in Abhängigkeit von dem Arbeiten des Strombegrenzungsreglers (11) wahlweise ein am Eingang oder am Ausgang des Strombegrenzungsreglers (11) auftretendes Signal zuführbar ist und hierzu dem Spannungsregler (16) ein Regelumschalter (20) vorgeschaltet ist, der beim Einsetzen der Strombegrenzung von dem Ausgangssignal auf das Eingangssignal des Stromreglers umschaltet.

## Claims

1. An intrinsic safety power supply device (1) having the following features :

a. a rectifier (2) for converting alternating mains current into a direct current ;

b. a semiconductor (3) controlled by a clock pulse generator (18) for periodic interruption of the direct current ;

c. a transformer (5) whose primary winding (4) is connected in series with the controllable semi-conductor (3) and whose secondary winding (6) feeds the output (12) ;

d. a regulator (11) to limit the output current at the secondary end ;

e. a short-circuiting device (10) controllable in dependence upon limit values ; characterised by the following further features ;

f. a choke (14) connected preceding the short-circuiting device (10) ;

g. a voltage limiting device (19) connected following the choke (14) ; and

h. the current limiting regulator (11) at the secondary end having a return current-voltage characteristic.

2. A circuit arrangement as claimed in Claim 1, characterised in that on the secondary side of the transformer (T) delay elements (C19, R36) are arranged for a delayed increase of the current and/or the voltage following the cancellation of a short-circuit at the output (+U).

3. A circuit arrangement as claimed in Claim 1, characterised in that a current measuring element (R3) is arranged on the primary side of the transformer (T), which element is connected to the clock pulse generator (V14) of the controllable semiconductor (V6) to effect a current limit or disconnection in the event of a short circuit on the secondary side.

4. A circuit arrangement as claimed in Claim 2, characterised in that a voltage regulator (26) arranged on the secondary side acts upon the primary circuit of the transformer (5), and can be supplied with a signal which alternatively occurs at the input or the output of the current limiting regulator (11) in dependence upon the operation of the current limiting regulator (11) and the voltage regulator (16) is preceded by a regulating change-over switch (20) which changes over from the output signal to the input signal of the current regulator when the current limit starts.

## Revendications

1. Dispositif d'alimentation en courant (1) à sécurité intrinsèque, présentant les caractéristiques suivantes :

a. un redresseur (2) servant à convertir un courant alternatif situé du côté réseau en un courant continu ;

b. un semiconducteur (3), qui peut être commandé par un générateur de cadence (18) et sert à interrompre périodiquement le courant continu ;

c. un transformateur (5), avec l'enroulement primaire (4) duquel se trouve monté en série le semiconducteur commandable (3) et dont l'enroulement secondaire (6) alimente la sortie (12) ;

d. un régulateur (11) servant à limiter le courant de sortie sur le côté secondaire ;

e. un dispositif de court-circuitage (10) pouvant être commandé en fonction de valeurs limites, remarquable par les caractéristiques supplémentaires suivantes :

f. une bobine d'arrêt (14) est branchée en amont du dispositif de court-circuitage (10),

g. un limiteur de tension (19) est branché en aval de la bobine d'arrêt (14), et

h. le régulateur de limitation de courant (11), situé du côté secondaire, possède une courbe caractéristique courant-tension rétrograde.

2. Montage suivant la revendication 1, caractérisé par le fait qu'il est prévu, sur le côté secondaire du transformateur (T), des lignes à retard (C19, R36) pour une montée, retardée dans le temps, du courant et/ou de la tension après suppression d'un court-circuit à l'entrée (+U).

3. Montage suivant la revendication 1, caractérisé par le fait qu'un circuit ampéremétrique (R3) est disposé sur le côté primaire du transformateur (T) et que ce circuit est relié au générateur de cadence (V14) du semiconducteur commandable (V6) de manière à réaliser une limitation du courant ou un débranchement lors de l'apparition d'un court-circuit au secondaire.

4. Montage suivant la revendication 2, caractérisé par le fait qu'au choix un signal apparaissant à l'entrée ou à la sortie du régulateur de limitation de courant (11), peut être envoyé à un régulateur de tension (16), disposé sur le côté secondaire et agissant sur le circuit primaire du transformateur (5), en fonction du travail du régulateur de limitation de courant (11), et qu'à cet effet en amont du régulateur de tension (16) se trouve branché un commutateur de réglage (20), qui, lors de l'introduction de la limitation de courant, déclenche une commutation du signal de sortie sur le signal d'entrée du régulateur de courant.

FIG 1

FIG 2

FIG 3

# FIG 4A

FIG 4B

0 082 105